(19) Europäisches Patentamt
European Patent Office
Office européen des brevets

(11) **EP 3 045 901 A1**

(12) **EUROPEAN PATENT APPLICATION**

(43) Date of publication:
**20.07.2016 Bulletin 2016/29**

(51) Int Cl.:
**G01N 27/403** (2006.01)

(21) Application number: **15305053.9**

(22) Date of filing: **19.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **HUTCHINSON S.A.**
  **75008 Paris (FR)**
• **Centre National de la Recherche Scientifique**
  **75016 Paris (FR)**
• **Institut Polytechnique de Grenoble**
  **38500 Grenoble (FR)**

(72) Inventors:
• **Ayme-Perrot, David**
  **68330 HUNINGUE (FR)**
• **Sonntag, Philippe**
  **77210 AVON (FR)**
• **Zimmermann, Marc**
  **38000 GRENOBLE (FR)**
• **Chatenet, Marian**
  **38240 MEYLAN (FR)**
• **Maillard, Frédéric**
  **38000 GRENOBLE (FR)**

(74) Representative: **GIE Innovation Competence Group**
  **310, avenue Berthelot**
  **69372 Lyon Cedex 08 (FR)**

(54) **Use of high specific surface area carbon materials as counter electrode for electrochemical measurements**

(57) Use of high specific surface area porous carbon materials as counter-electrode and possibly as pseudo-reference electrodes for electrochemical measurements. Method for making electrochemical measurements using high specific surface area carbon materials. Electrochemical cells comprising high specific surface area carbon materials as counter-electrode and pseudo-reference electrodes.

EP 3 045 901 A1

## Description

The invention is directed to the use of high specific surface area porous carbon materials as counter-electrode and possibly as pseudo-reference electrode for electrochemical measurements. It is also directed to a method for making electrochemical measurements using such high specific surface area carbon materials. The invention is further directed to electrochemical cells comprising high specific surface carbon materials as counter-electrode and pseudo-reference electrodes.

## State of the art

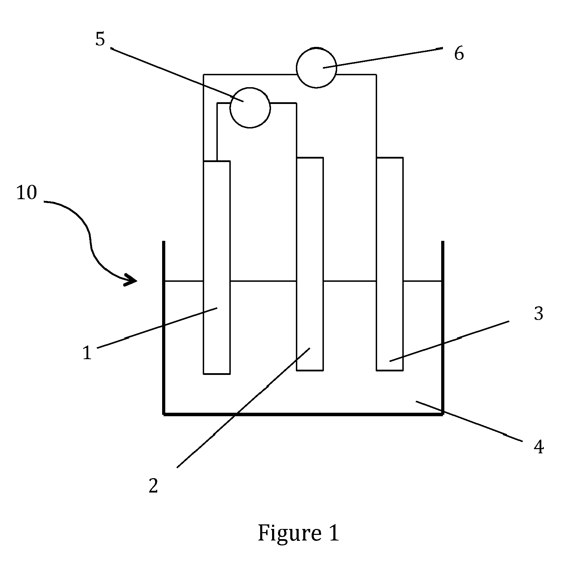

Electrochemical measurements generally rest on the use of a three-electrode electrochemical cell (figure 1). The three-electrode system consists of a working electrode (WE) 1, a reference electrode (REF) 2, and an auxiliary electrode also named counter-electrode (CE) 3. According to the most simple electrochemical cell design, the three electrodes are in contact with an electrolyte 4. This system is used to generate voltage and current from chemical reactions. Alternately it can induce chemical reactions by the input of electrochemical current.

The working electrode 1 is in contact with the electrolyte 4 and in contact with the analyte. The reaction occurs at its surface. When a certain potential V is applied to the working electrode 1, a transfer of electrons between the working electrode 1 and the analyte 4 can take place. The current I (A) measured at the working electrode passes through the counter-electrode 3 for balance. The counter-electrode 3 balances electronic and ionic flows by redox reactions with the electrolyte.

In aqueous media, a platinum counter-electrode is usually used, and ultimately leads to the $H_2$ or $O_2$ evolution, consuming or producing protons, and modifying the pH of the media. Furthermore, during extended oxidation of the counter-electrode, platinum ions can be produced, which diffuse into the electrolyte and redeposit on the working electrode, potentially causing misleading results (the same can occur for any metal counter-electrode). To avoid contamination of the electrolyte on account of reactions occurring at the counter-electrode, when the electrolyte is aqueous, the counter-electrode can be in a separate bath, and a saline bridge or a capillary or a frit permits the transfer of charges between the working electrode and the counter-electrode, but this protection is not total and contamination inevitably occurs.

However a similar solution does not exist when the electrolyte is organic. In this case, the reactions occurring at the counter-electrode inevitably contaminate the electrolyte and the sample. This phenomenon introduces a bias in the experiment that the scientific wishes to avoid. In organic media and ionic liquids, the decomposition of the electrolyte on the counter-electrode usually follows complex mechanism, and several species can be formed. In lithiated media, a lithium counter-electrode can be used, as long as it is stable when in contact with the electrolyte, which is not the case with several common solvents, including acetonitrile. The classical solution to address these issues is to limit the diffusion of species from the counter-electrode to the working electrode, by using sintered glass for example. However, this solution leads to complicated cell designs, which may not be practical for complex coupled *in situ* experiments, and is not effective for experiments, which involve long-term polarization.

The reference electrode allows determining the working electrode potential. The major requirement for a reference electrode is that the potential does not change with time and with the electronic and ionic flows. Since the passage of current through an electrode can alter the potential, such effects are minimized by selecting a reference electrode with a high input impedance, thereby decreasing the current passing through it to negligible levels, and by using a non-polarizable electrode as the reference electrode, so that the passage of small currents does not alter the potential.

An alternate solution to absolute reference electrodes (the potential of which does not vary) is pseudo-reference electrodes. Pseudo-reference electrodes do not maintain a constant potential but vary predictably with the conditions to which they are submitted. If the conditions are known, the potential can be calculated and the electrode can be used as a reference. Pseudo-reference electrodes also refer to electrodes the potential of which can vary, but which are submitted to a range of current intensity wherein this variation that is null or negligible.

To avoid contamination of the analyte solution, the reference electrode can be immersed in a solvent insulated from the electrolyte by a sintered glass for example. Various types of reference electrodes present this configuration, but none is entirely satisfying. A contact between the two solvent systems being necessary, a transfer of contaminants through the insulating wall (the sintered glass for example) is inevitable. Concerning the reference electrode in non-aqueous media, there are four main systems used: The aqueous calomel electrode ($Pt|Hg|HgCl_2|satKCl$), the non-aqueous silver/silver salt electrode ($Ag|AgX|X^-$) and the references based on ferrocene/ferricenium derivatives. All involve a different electrolyte from the studied one. Therefore, especially for longer experiments, the risk of contamination is severe. The lithium or sodium references ($Li|Li^+$ and $Na|Na^+$) cannot be used in many solvents against which they are not stable.

The two main issues regarding the counter-electrodes and the reference electrodes in electrochemical characterization experiments can thus be summarized as: the contamination of the working electrolyte and the difficulty to design practical cells for complex experiments.

It has been the aim of this invention to solve these problems and to provide an electrochemical measurement system, which is deprived of the disadvantages met in the prior art.

Carbon materials have been widely used as electrode substrates to make various electrodes in varied electrochemical devices. Carbon materials have broad potential window, low background current, rich surface chemistry and are chemically inert in comparison with other electrode materials. Carbon materials are rather cheap. Therefore, carbon electrodes have developed for varied uses. Frequently used carbon electrodes are for example: pyrolytic graphite electrodes, glassy carbon electrodes, carbon paste electrodes, carbon fibber electrodes and electrodes made of carbon composites.

Specific chemical reactions have been studied by electrochemical measurement systems using carbon electrodes including carbon counter-electrodes. However, such systems were not generally applicable to the study of any electrochemical reaction. Additionally, prior art systems were not appropriate for making electrochemical measurements in organic media. Finally, prior art electrochemical measurement systems using carbon electrodes used classic carbon materials, not high specific surface area carbon materials.

Document WO2014/060904 discloses high specific surface area carbon electrodes and their use in a supercapacitor. However, the electrodes in a supercapacitor have a different function as compared to their function in a three-electrode electrochemical measurement system: in a supercapacitor, the potential of the counter-electrode varies continuously with time. The counter-electrode functions as a capacity: its potential changes constantly with the conveyed charge on the whole solvent stability field, following the law $Q = C.U/3.6$, with C the electric capacity of the capacitor (expressed in Farad), U the voltage (in V) and Q the charge (in mAh). Further, the reference electrode is short-circuiting to the counter-electrode: it is the same electrode the potential of which varies. Consequently, it is not a reference electrode according to the analytical electrochemistry definition of reference electrodes. Finally, in case the same couple of electrode as disclosed in WO2014/060904 were used in an electrochemical measurement cell, the real high surface area and high tortuosity of the working electrode would favour inhomogeneous processes at the surface and different diffusion paths in the bulk, which is something that the skilled professional wishes to avoid by using small surface area electrodes to get accurate results and potential models

To the contrary of the prior art, it is shown, according to the invention, that by using a capacitive (chemically inert) porous carbon as counter-electrode, the problem of contamination of the working electrolyte is solved. Using a porous carbon as counter-electrode gives access to electrochemical cells with a simple design that can be used for complex experiments. When such a device is used with a charge low enough not to cause significant variation in potential, this counter-electrode can also fulfill the function of pseudo-reference electrode.

When a potential cycling is performed in a 3-electrode cell according to the invention (very classical way to proceed in analytical electrochemistry), a well-sized porous carbon based counter-electrode is stable (it does not deteriorate) and its potential remains in the vicinity of its point-of-zero charge potential: a real benefit is the possibility to multiply successive voltammetry cycles without any degradation.

The electrochemical measurement systems deriving from this arrangement overcomes real constraints and difficulties encountered in prior art analytical electrochemistry systems.

## Summary of the invention

A first object of the invention consists in an electrochemical cell for electrochemical characterization comprising at least a working electrode, a counter-electrode, current collectors linked to the electrodes, and an electrolyte, the electrodes being in contact with the electrolyte, wherein the counter-electrode is of a material selected from porous carbon materials with a specific surface-area $Spe\text{-}Surf_{(CE)}$ superior or equal to 100 m$^2$/g, and the working electrode is of a material different from the counter-electrode.

The invention is also directed to a method for the electrochemical characterization of an analyte, wherein this method comprises:

a/ introducing the analyte in an electrochemical cell comprising at least a working electrode, a counter-electrode, current collectors linked to the electrodes, and an electrolyte, the analyte being solubilized in the electrolyte and the electrodes being in contact with the electrolyte, wherein the counter-electrode is of a material selected from: porous carbon materials with a specific surface-area $Spe\text{-}Surf_{(CE)}$ superior or equal to 100 m$^2$/g, and the working electrode is of a material different from the counter-electrode,
b1/ applying a potential to the working electrode,
c1/ measuring the current between the working electrode and the counter-electrode.

The invention is further directed to a method for the electrochemical characterization of an analyte, wherein this method comprises:

a/ introducing the analyte in an electrochemical cell comprising at least a working electrode, a counter-electrode, current collectors linked to the electrodes, and an electrolyte, the analyte being solubilized in the electrolyte and the electrodes being in contact with the electrolyte, wherein the counter-electrode is of a material selected from: porous carbon materials with a specific surface-area Spe-Surf$_{(CE)}$ superior or equal to 100 m$^2$/g, and the working electrode is of a material different from the counter-electrode,

b2/ applying a current between the working electrode and the counter-electrode,

c2/ measuring the potential of the working electrode.

The invention is further directed to the use of a porous carbon material with a specific surface-area Spe-Surf$_{(CE)}$ superior or equal to 100 m$^2$/g, as counter-electrode in an electrochemical cell comprising a working electrode, current collectors linked to the electrodes, and an electrolyte, the electrodes being in contact with the electrolyte, for the electrochemical characterization of an analyte.

According to a favourite embodiment of the invention, the working electrode is of a porous carbon material with a real surface-area Surf$_{(WE)}$ that verifies:

$$10 \ \mathrm{Surf}_{(WE)} \leq \mathrm{Spe\text{-}Surf}_{(CE)}$$

According to an even more favourite embodiment of the invention, the working electrode is of a porous carbon material with a real surface-area Surf$_{(WE)}$ that verifies:

$$100 \ \mathrm{Surf}_{(WE)} \leq \mathrm{Spe\text{-}Surf}_{(CE)}$$

According to a favourite embodiment of the invention, the counter-electrode is made of a porous carbon material with a specific surface-area Spe-Surf$_{(CE)}$ superior or equal to 250 m$^2$/g.

According to an even more favourite embodiment of the invention, the counter-electrode is made of a porous carbon material with a specific surface-area Spe-Surf$_{(CE)}$ superior or equal to 500 m$^2$/g.

According to a favourite embodiment of the invention, the counter-electrode is made of a material selected from: porous carbon monoliths.

According to a favourite embodiment of the invention, the electrolyte is a liquid in which the electrodes are immersed.

According to a favourite embodiment of the invention, the electrolyte is an organic electrolyte.

According to a favourite embodiment of the invention, the counter-electrode and the reference electrode are one sole electrode.

According to a favourite embodiment of the invention, the counter-electrode also fulfills the function of reference electrode.

According to a favourite embodiment of the invention, the charge Q, in mAh, transferred through the counter-electrode (3) is controlled to verify:

$$Q \leq 10.10^{-3}.C_{sp} \ . \ M/3.6$$

with C$_{sp}$ the specific capacity of the counter-electrode material in the studied medium (electrolyte + analyte) expressed in F/g and M the mass of the material expressed in g.

Figures:

Figure 1: Schematic representation of a three-electrode electrochemical cell

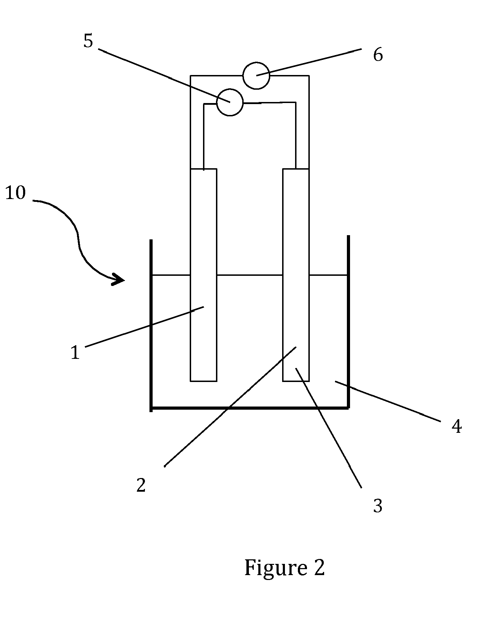

Figure 2: Schematic representation of an electrochemical cell comprising only a working electrode and a counter-electrode also fulfilling the function of a reference electrode

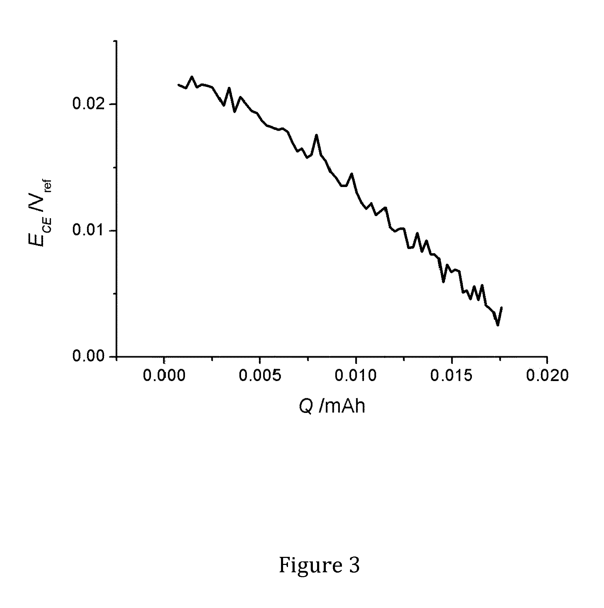

Figure 3: Graphic representation of the variation of the counter-electrode potential (ordinate in volt) with the charge (abscissa in mA/h) on a three-electrode cell (WE: platinum wire of 0.5 cm$^2$, CE: carbon xerogel of 0.1 g) when the potential of the working electrode is fixed at 0.5 V vs a silver/silver nitrate reference (Ag/AgNO$_3$) in presence of 5 mM ferrocene + 0.3 M lithium triflate in DMSO.

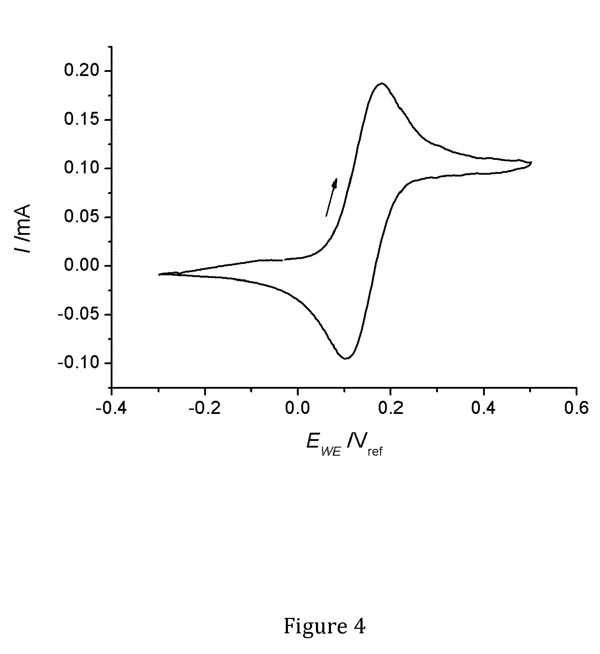

Figure 4: Graphic representation of a cyclic voltamperometry obtained in a two electrode cell (WE: platinum wire of 0.5 cm$^2$, CE + Ref: carbon xerogel of 0.1g) at a scan rate of 100 mV s$^{-1}$ in the presence of 5 mM ferrocene + 0.3 M lithium triflate in DMSO. Current intensity (ordinate, mA) is represented as a function of the difference of potential between the working electrode and the reference electrode (abscissa in volt).

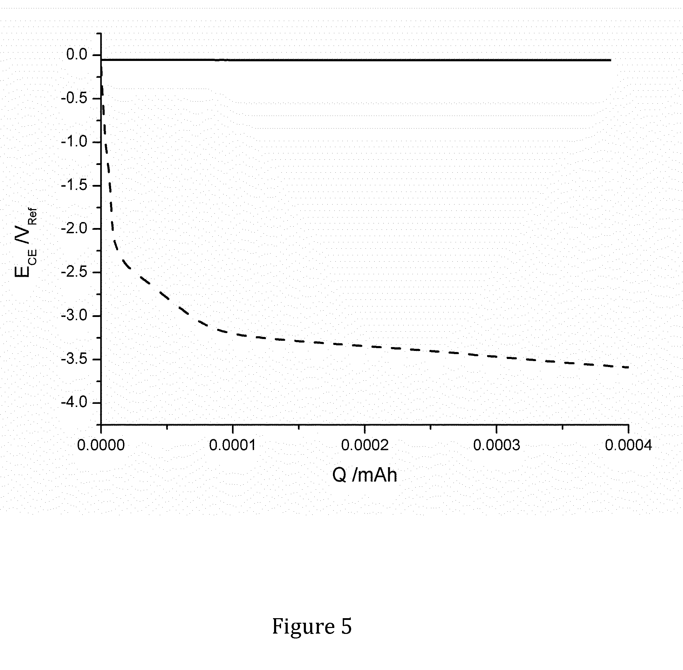

Figure 5: Graphic representation of the variation of the potential of a counter-electrode made of carbon xerogel (solid) or platinum (dashed) obtained in a three-electrode cell (Ref: silver/silver nitrate) when a voltammetry is performed between - 0.2 V$_{Ref}$ and 0.5 V$_{Ref}$ at 100 mV s$^{-1}$ on the platinum working electrode (solid) or carbon xerogel (dashed) in presence of 5mM ferrocene + 0.3M lithium triflate in DMSO. The difference of potential between the counter-electrode and the reference electrode (ordinate in volt) is represented as a function of the charge (abscissa in mAh).

In the different figures, a same element is designated by the same numeral reference.

**Detailed description**

The principle of the present invention is based on the capacitive behavior of a high specific surface area carbon based electrode to store a great amount of energy without involving any redox reaction. Indeed, on such an electrode, the electronic and ionic flows can be compensated by non faradic processes on its surface, namely charging or discharging the electrical double layer. Therefore, when using such a material as a counter-electrode, no pollution will be produced, as long as it is stable in the working electrolyte. Carbon is stable against most of the electrolytes used in electrochemistry and is therefore a perfect material for such an application. A high specific surface area carbon electrode can then be used in direct contact with the working electrolyte, and in proximity to the working electrode.

Furthermore, if the counter-electrode has a sufficiently high real surface area in contact with the electrolyte, its potential will not vary much during the experiments. It can then be used simultaneously as a stable pseudo-reference electrode. The design of the electrochemical cell is then drastically simplified, as only two electrodes in contact with the same electrolyte are needed.

In an electrochemical measurement or characterization experiment, the counter-electrode should remain in the range of potential values wherein it stores charges, in order to avoid provoking a decomposition of the electrolyte (and/or analyte). Briefly: the voltage should remain in the range of values wherein the current of decomposition of electrolyte is null, which represents the zone wherein the capacitance stores charges and the electrolyte is stable. When the voltage is superior or inferior to this value, the electrolyte decomposes. This combination of parameters is specific to an electrode/electrolyte couple as a function of the chemical nature and specific surface of the electrode and the chemical nature of the electrolyte and is known as the Electrochemical Stability Window (ESWD).

For example, for a counter-electrode functioning in an aqueous electrolyte, the upper limit of the ESWD is a voltage of 1.23 V. Beyond this value, the electrolyte starts to decompose. According to the invention, the counter-electrode is preferably selected of a dimension sufficient to maintain its potential at or below 10 mV. In these conditions, the counter-electrode stores electrical charges and its potential does not vary substantially. Therefore, it can also fulfil the function of reference electrode.

Counter-electrode (CE):

The counter-electrode is made of a material selected from porous carbon materials with a high specific surface area.

The carbon material with a high specific surface area is a porous material comprising, or consisting essentially in, carbon.

The counter-electrode can be based on porous carbon powder coupled with a binder (example: PVdF, PTFE) coated on an inert current collector such as a graphite foil. When the counter-electrode is of a composite material, its stability should be checked before use. The binder should be stable in the conditions of use of the electrochemical cell. The skilled professional checks chemical compatibility of the binder with the electrolyte in a simple manner: the electrode is immersed in the electrolyte and a visual test permits to check that it has not been degraded by contact with the electrolyte. The counter-electrode can be tested for its stability by using it as a working electrode in an electrochemical cell and submitting it to a cycling test. If cycling does not degrade the electrode, then its stability is sufficient to use it as counter-electrode. According to this embodiment the composite material of which the counter-electrode is made comprises at least 80 % by weight of carbon, advantageously at least 90% by weight of carbon.

According to a favorite embodiment, the counter-electrode is a porous carbon monolith, such as materials disclosed in US2011/0140051 or WO2014/060904 which result from pyrolysis of a xerogel. Carbon materials disclosed in FR 1455293, can also be used as counter and reference electrodes once in shape. It is also possible to obtain efficient counter and reference electrodes by using classical carbon aerogels and xerogels issued from RF aerogels and xerogels by pyrolysis, such as materials disclosed in R.W. Pekala, J Mater Sci, 24 (1989), pp. 3221-3227; A. Leonard & al., Carbon, Volume 43, Issue 8, July 2005, Pages 1808-1811.

Advantageously, the porous carbon material of which the counter-electrode is made comprises at least 99 % by weight of carbon, even more preferably at least 99.5% by weight of carbon. It is the case for porous carbon monoliths, carbon aerogels and xerogels issued from RF aerogels and xerogels by pyrolysis.

The counter-electrode material has a specific surface-area Spe-Surf$_{(CE)}$ superior or equal to 100 m$^2$/g, preferably, superior or equal to 250 m$^2$/g, even more preferably, superior or equal to 500 m$^2$/g.

The specific surface area of the porous carbon electrode material is evaluated by the conventional BET method. In a manner which is well known to the skilled professional, the surface area of a porous material is estimated from the amount of nitrogen adsorbed in relationship with its pressure at the boiling temperature of liquid nitrogen and at normal atmospheric pressure. The information collected is interpreted according to the model of Brunauer, Emmett and Teller (BET method).

The carbon material with a high specific surface is coated on or linked to an inert current collector for use in the electrochemical cell.

The potential U$_{CE}$ of the counter-electrode varies with the conveyed charge Q accordingly to U$_{CE}$ = 3.6*Q/(Spe-Surf$_{(CE)}$*M). As long as the potential range reached by the counter-electrode is controlled so that no species present in the working electrolyte are electrochemically active, no faradic process occurs on the counter-electrode, and no pollution is created.

For example, if the capacity density of carbon in an electrolyte, due to electrical double layer processes, is in the order of 0.1 F.m$_r^{-2}$, wherein m$_r$ refers to the real (not apparent) surface of the material; then, a carbon of specific surface S (in m$^2$.g$^{-1}$) will store 28$S$ μAh.V$^{-1}$.g$^{-1}$. Concretely, the potential of a counter-electrode made of one gram of a carbon with a specific surface of 1 m$^2$.g$^{-1}$ will increase (decrease) by 1 V when a capacity of 28 μAh has been delivered by a reduction (oxidation) electrochemical process on the working electrode.

The question of the electrode cleaning is important to tackle in the case of the use of a high volume porous electrode. Since there are not faradaic reactions in a counter-electrode according to the invention, a simple soaking in an appropriate solvent to dissolve the different elements of the electrolyte is sufficient to prevent the electrode from contamination from one experiment to the other.

Working electrode:

The working electrode is of a material different from the counter-electrode.

The working electrode can be of any material known to the skilled professional for use as working electrode in electrochemical measurement cells. For example, it can be made of an inert material like platinum, gold, or carbon, like for example glassy carbon. In that case the substrate provides electric charges without chemical interaction with the analyte. Alternately, the working electrode can be of an electrochemically active material like iron, copper, lithium, sodium for example.

The working electrode can be made of porous carbon, like the materials that are used for making the counter-electrode. However, in this case, its real surface area should be inferior to the real surface area of the counter-electrode. According to this variant, it is especially preferred to use a working electrode with an overal active surface-area below 10 %, or better below 1 %, of the total active surface-area of the RE+CE.

In case the working electrode is made of a non porous material, its apparent surface area is equal to its real surface area and is usually a few cm$^2$, the real surface area is designated Surf$_{(WE)}$.

In case the working electrode is made of a porous material, its apparent surface area is different from its real surface area Surf$_{(WE)}$ and in that case it is preferred that the real surface area of the working electrode material Surf$_{(WE)}$ should be kept low enough to avoid inhomogeneous electrochemical behaviour of the analyte on its surface.

This condition can be expressed for both variants (porous and non porous working electrode material) by the following conditions:

$$10 \ \mathrm{Surf}_{(WE)} \leq \mathrm{Spe\text{-}Surf}_{(CE)}$$

preferably

$$100 \ \mathrm{Surf}_{(WE)} \leq \mathrm{Spe\text{-}Surf}_{(CE)}$$

Reference electrode:

In the description and the claims the expressions "reference electrode" and "pseudo-reference electrode" will be used indifferently and can be exchanged. They designate an electrode the potential of which does not vary significantly in the conditions of use of the electrochemical cell. An electrode the potential of which does not significantly vary means: an electrode the potential of which varies within a range of values comprised between $\pm$ 10 mV around its reference value.

The reference electrode can be any electrode known to the skilled professional for this function. In aqueous medium for example: $H^+/H_2$, Ag/AgCl, calomel. In organic medium, very few reference electrodes are known: $Ag/AgNO_3$ is the most frequently used.

According to a favourite embodiment, the counter-electrode also fulfils the function of pseudo-reference electrode. A key point is the current / voltages ranges conveyed so that the carbon remains a pseudo-reference, as illustrated in the example. Practically, to be in these conditions, an over-dimensionned counter/reference electrode as compared to the current / voltages ranges conveyed, will satisfy this condition. The counter-electrode should be of a dimension such that when the charge varies, the potential variation of the counter-electrode remains inferior or equal to 10 mV. In these conditions, the counter-electrode stores charges and its potential does not vary. Therefore, it can also be used simultaneously as counter and pseudo-reference electrode.

The charge accumulated in an electrode is expressed by the law Q = C.U/3.6, with C the electric capacity of the electrode (expressed in Farad), U the voltage (in V) and Q the charge (in mAh). For an electrode material C = $C_{sp}$.M, with $C_{sp}$ the specific capacity of the electrode material in the studied medium (electrolyte + analyte) expressed in F/g and M the mass of the material expressed in g.

The counter-electrode can also be used as a reference electrode so long as the charge transferred through the counter-electrode is controled to verify:

$$Q \leq 10.10^{-3}.C_{sp} \, . \, M/3.6$$

This condition can be tested according to the protocol disclosed in a detailed manner in the experimental part and the examples illustrated in table 1 below.

The following table gives the calculated admissible amounts of charge (mAh) that can be stored in a counter-electrode according to its specific capacitance Csp (which can vary significantly from one media to another one) and its mass, that lead to a maximum potential variation of the counter-electrode of 10 mV. Csp is expressed in $F.g^{-1}$ in the left column and the mass is expressed in g in the first line. Then, for each specific capacitance/electrode mass couple, the counter-electrode can be also used as a pseudo-reference electrode as long as the charge that flows between the working electrode and the counter electrode does not exceed the corresponding charge value.

| M (g) Csp ($F.g^{-1}$) | 0.1 | 0.2 | 0.5 | 1 | 2 | 5 | 10 |
|---|---|---|---|---|---|---|---|
| 10 | 0.0028 | 0.0056 | 0.014 | 0.028 | 0.056 | 0.14 | 0.28 |
| 20 | 0.0056 | 0.0112 | 0.028 | 0.056 | 0.112 | 0.28 | 0.56 |
| 50 | 0.014 | 0.028 | 0.07 | 0.14 | 0.28 | 0.7 | 1.4 |
| 100 | 0.028 | 0.056 | 0.14 | 0.28 | 0.56 | 1.4 | 2.8 |
| 120 | 0.0336 | 0.0672 | 0.168 | 0.336 | 0.672 | 1.68 | 3.36 |
| 150 | 0.042 | 0.084 | 0.21 | 0.42 | 0.84 | 2.1 | 4.2 |

Table 1. Calculated admissible amounts of charge (mAh) that can be stored in a counter-electrode according to its specific capacitance Csp and its mass.

Electrochemical cell:

The electrochemical cell according to the invention corresponds to the representation of figure 1 and figure 2.

According to a favorite embodiment illustrated in figure 2, the function of reference electrode 2 and counter-electrode 3 are achieved by the same electrode. The electrochemical cell 10 includes an electrolyte 4 which is a solution. The electrodes 1, 2, 3 are in contact with the electrolyte by immersion. Alternately, the electrolyte can be a solid (this embodiment is not represented in the figures). According to this embodiment the electrolyte further includes a liquid fraction which penetrates the pores of the electrodes and permits contact with the solid electrolyte. The electrolyte 4 can be organic or aqueous. According to a favorite embodiment, the electrolyte 4 is organic. For example, it can be acetonitrile, dichloromethane, DMF, ionic liquids.

The invention gives access to an electrochemical measurement cell 10 wherein the working electrode 1, the counter-electrode 3 and the reference electrode 2 (possibly confounded with the counter-electrode 3) are immersed in the same electrolyte 4 without any contamination produced at the counter-electrode 3. The design of the cell 10 is made more simply than prior art cells wherein the counter-electrode and the reference electrode have to be isolated from the electrolyte + analyte solution.

The solvent, electrolyte, and material composition of the working electrode determine the potential range that can be accessed during the experiment.

In a known manner, the electrochemical cell 10 includes at least two current collectors (not represented in figure 1) coated with the working electrode 1 and the counter-electrode 3. In case the reference electrode 2 is distinct from the counter-electrode 3, it is coated on a third current collector.

Electrochemical device:

The electrochemical device according to the invention comprises a potentiostat 5 for controlling the potential applied between the working electrode 1 and the reference electrode 2. It further comprises a current-to-voltage converter 6 for measuring the current between the working electrode 1 and the counter-electrode 3. A user interface (not represented) permits to define the way the potential or current is applied: the potential waveform.

Electrochemical experiments:

The electrodes and system according to the invention can be used in most commonly used electrochemical measuring techniques, including cyclic voltammetry, differential pulse voltammetry, electrochemical impedance spectroscopy, chronoamperometry, chronopotentiometry and chronocoulometry. The last two techniques remain usable as long as the total charge that conveys through the electrode remains in the admissible range that corresponds to a capacitive behaviour of the counter-electrode.

Cyclic voltammetry is used to provide information regarding the thermodynamics of redox processes, adsorption processes and the kinetics of electron transfer reactions. It is the most widely used measuring technique in electrochemical analysis.

In a typical cyclic voltammetry experiment, the impulse potential is ramped linearly versus time back and forth between two extreme vertex potentials and a couple of redox peaks are observed. Single or multiple cycles can be performed, the choice depending on the requirements of specific analysis. During cyclic voltammetric scanning, analytes will exchange electrons with the electrode under various potentials and the currents may be proportional to the concentration of the analytes.

Cyclic voltammetry is used to study a variety of redox processes, like for example: to determine the stability of reaction products, the presence of intermediates in redox reactions, to study electron transfer kinetics, to study the reversibility of a reaction. Cyclic voltammetry can also be used to determine the electron stoichiometry of a system, the diffusion coefficient of an analyte, and the formal reduction/oxidation potential of an analyte, which can be used as an identification tool. The method for the electrochemical characterization of an analyte, comprises:

a/ introducing the analyte in the electrochemical cell according to the invention and either:
b1/ applying a potential to the working electrode,
c1/ measuring the current between the working electrode and the counter-electrode
or
b2/ applying a current between the working electrode and the counter-electrode,
c2/ measuring the potential of the working electrode.

According to the method selected, the steps b1 - c1 or b2 - c2 can be repeated with variations in the applied potential, or respectively, the applied current, in order to achieve a cycle. Cycling can be repeated according to processes well known to the skilled professional. The electrochemical cells according to the invention present the advantage of stability after repeated cycling.

In experiments wherein the counter-electrode is used as reference or pseudo-reference electrode, the conveyed charge should be controlled to correspond to a capacitive behavior of the counter-electrode.

**Experimental part:**

**A-Example:**

Counter-electrode: A monolithic carbon xerogel electrode of 0.1 g with a specific surface of 640 $m^2.g^{-1}$ prepared by following the protocol disclosed in the experimental part of application US2011/0140051 (I-1 Preparation of the Xerogel and I-2 Preparation of the Carbon-based Material) is used as a counter-electrode.

The carbon material is prepared by following the protocol of US2011/0140051 with the following materials and parameters: The latex employed is LITEX N2890 from Unipex. The content of latex in the RF system is of 10%. The pH of the solution is adjusted at 6.5 before launching the sol-gel transition by heating. The other materials and parameters are identical to those taught in US2011/0140051 § (0095)-(0105).

Working electrode: The working electrode is made of a platinum wire of 0.5 $cm^2$ surface.

Electrolyte: the electrolyte is composed of 0.3M lithium triflate and 5mM ferrocene in DMSO.

Measurement of the BET Specific Surface is achieved according to the protocol disclosed in in the experimental part of application US2011/0140051 § (0122) - (0123)

1- Test Protocol 1:

Reference electrode: a silver/silver nitrate reference electrode.

The potential of the working electrode is set at 0.5 V so that the oxidation of ferrocene occurs.

The total transferred charge is calculated as a function of time.

The difference of potential between the counter-electrode and the reference electrode ($E_{CE}/V_{REF}$) is measured as a function of the total transferred charge (Q/mAh) and the results are illustrated in figure 3.

A linear relation between the counter-electrode potential and the total transferred charge is observed. This particular counter-electrode is able to store 0.8 $mAh.V^{-1}$. Therefore it can be considered as a good pseudo-reference as long as the total charge transferred by the working electrode is not superior to 8 $\mu Ah$ (which correspond to a 10 mV shift).

2- Test Protocol 2:

Reference electrode: the counter-electrode is used simultaneously as the reference electrode.

Cyclic voltammetry experiment: The cycles of ramps in potential are centered around the standard potential of the ferrocene/ferrocenium couple. The scan rate is 0.1 V $s^{-1}$. The current at the working electrode (I/mA) is plotted as a function of the difference of potential between the working electrode and the reference electrode ($E_{CE}/V_{REF}$) (figure 4). There are not any distortions of the oxidation or reduction peaks even at a relatively high scan rate of 0.1 V $s^{-1}$.

3- Electrode cleaning:

Electrode cleaning is achieved by immersion of the monolithic electrode in the solvent used for the experiment under ultrasound for 30 minutes and is then immersed in acetone for at least a night. No pollution or performance decrease were detected over more than 20 experiments.

**B- Counter-example**

Counter-electrode: The counter-electrode is made of a platinum wire of 0.5 $cm^2$ surface.

Working electrode: The working electrode is made of a platinum wire of 0.5 $cm^2$ surface.

Electrolyte: the electrolyte is composed of 0.3 M lithium triflate and 5 mM ferrocene in DMSO.

1- Test Protocol:

Reference electrode: a silver/silver nitrate reference electrode.

A cyclic voltammetry experiment is performed on the working electrode between -0.2 $V_{Ref}$ and 0.5 $V_{Ref}$ at 100 mV $s^{-1}$ and the current response of the Ferrocene/Ferrocenium redox couple is measured. The potential of the counter-electrode made of platinum is monitored as shown in Figure 5

The same experiment is achieved with the platinum counter-electrode and with the carbon xerogel electrode according to the invention and disclosed in § A-example. It is observed under the same conditions that the potential of the counter-electrode made of carbon xerogel does not vary significantly. Conversely, it is observed that the potential of the counter-electrode made of platinum varies significantly and reaches the limits of the ESWD. Electrolyte decomposition, therefore electrolyte pollution, occurs on the platinum counter-electrode, while it does not on a carbon xerogel counter-electrode.

**Claims**

1. An electrochemical cell (10) for electrochemical characterization comprising at least a working electrode (1), a counter-electrode (3), current collectors linked to the electrodes, and an electrolyte (4), the electrodes (1, 3) being in contact with the electrolyte (4), wherein the counter-electrode (3) is of a material selected from porous carbon materials with a specific surface-area $\text{Spe-Surf}_{(CE)}$ superior or equal to 100 m$^2$/g, and the working (1) electrode is of a material different from the counter-electrode (3).

2. An electrochemical cell (10) according to claim 1, wherein the working electrode (1) is of a porous carbon material with a real surface-area $\text{Surf}_{(WE)}$ that verifies:

$$10\ \text{Surf}_{(WE)} \le \text{Spe-Surf}_{(CE)}, \text{ preferably } 100\ \text{Surf}_{(WE)} \le \text{Spe-Surf}_{(CE)}.$$

3. An electrochemical cell (10) according to claim 2, wherein the counter-electrode (3) is made of a porous carbon material with a specific surface-area $\text{Spe-Surf}_{(CE)}$ superior or equal to 250 m$^2$/g, preferably superior or equal to 500 m$^2$/g.

4. An electrochemical cell (10) according to anyone of the preceding claims, wherein the counter-electrode (3) is made of a material selected from: porous carbon monoliths.

5. An electrochemical cell (10) according to anyone of the preceding claims, wherein the electrolyte is a liquid in which the electrodes are immersed.

6. An electrochemical cell (10) according to anyone of the preceding claims, wherein the electrolyte (4) is an organic electrolyte.

7. A method for the electrochemical characterization of an analyte, wherein this method comprises:

   a/ introducing the analyte in an electrochemical cell (10) comprising at least a working electrode (1), a counter-electrode (3), current collectors linked to the electrodes, and an electrolyte (4), the analyte being solubilized in the electrolyte (4) and the electrodes (1, 2, 3) being in contact with the electrolyte (4), wherein the counter-electrode (3) is of a material selected from: porous carbon materials with a specific surface-area $\text{Spe-Surf}_{(CE)}$ superior or equal to 100 m$^2$/g, and the working electrode (1) is of a material different from the counter-electrode (3),
   b1/ applying a potential to the working electrode (1),
   c1/ measuring the current between the working electrode (1) and the counter-electrode (3).

8. A method for the electrochemical characterization of an analyte, wherein this method comprises:

   a/ introducing the analyte in an electrochemical cell (10) comprising at least a working electrode (1), a counter-electrode (3), current collectors linked to the electrodes, and an electrolyte (4), the analyte being solubilized in the electrolyte (4) and the electrodes (1, 2, 3) being in contact with the electrolyte (4), wherein the counter-electrode (3) is of a material selected from: porous carbon materials with a specific surface-area $\text{Spe-Surf}_{(CE)}$ superior or equal to 100 m$^2$/g, and the working electrode (1) is of a material different from the counter-electrode (3),
   b2/ applying a current between the working electrode (1) and the counter-electrode (3),
   c2/ measuring the potential of the working electrode (3).

9. The method according to claim 7 or claim 8 wherein the counter-electrode (3) also fulfills the function of reference electrode (2).

**10.** The method according to claim 9, wherein said method comprises

- controlling the charge Q, in mAh, transferred through the counter-electrode (3) to verify:

$$Q \leq 10.10^{-3}.C_{sp}.M/3.6$$

with $C_{sp}$ the specific capacity of the counter-electrode material in the studied medium (electrolyte + analyte) expressed in F/g and M the mass of the material expressed in g.

**11.** Use of a porous carbon material with a specific surface-area Spe-Surf$_{(CE)}$ superior or equal to 100 m$^2$/g, as counter-electrode (3) in an electrochemical cell (10) further comprising a working electrode (1), current collectors linked to the electrodes, and an electrolyte (4), the electrodes (1, 2, 3) being in contact with the electrolyte (4), for the electrochemical characterization of an analyte.

**12.** Use according to claim 11 wherein the counter-electrode (3) also fulfills the function of reference electrode (2).

Figure 1

Figure 2

Figure 3

Figure 4

Figure 5

Europäisches
Patentamt

European
Patent Office

Office européen
des brevets

# EUROPEAN SEARCH REPORT

Application Number

EP 15 30 5053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAZZARI ET AL: "High voltage, asymmetric EDLCs based on xerogel carbon and hydrophobic IL electrolytes", JOURNAL OF POWER SOURCES, ELSEVIER SA, CH, vol. 178, no. 1, 1 February 2008 (2008-02-01), pages 490-496, XP022479767, ISSN: 0378-7753, DOI: 10.1016/J.JPOWSOUR.2007.12.029 * abstract * * Chapter Experimental * * table 1 * * figures 4,5 * | 1-6 | INV. G01N27/403 |
| X | EP 1 431 757 A1 (POPOV ANDREY VENIAMINOVICH [RU]) 23 June 2004 (2004-06-23) * [0044] * * claims 1-4 * | 1-5,7-12 | |
| X | MARIANA BOTELHO BARBOSA ET AL: "Electrochemical properties of carbon xerogel containing nitrogen in a carbon matrix", MICROPOROUS AND MESOPOROUS MATERIALS, ELSEVIER SCIENCE PUBLISHING, NEW YORK, US, vol. 162, 3 February 2012 (2012-02-03), pages 24-30, XP028414944, ISSN: 1387-1811, DOI: 10.1016/J.MICROMESO.2012.02.005 [retrieved on 2012-02-10] * Chapter 2.7 * | 1-5 | TECHNICAL FIELDS SEARCHED (IPC) G01N |
| X,D | US 2011/140051 A1 (SONNTAG PHILIPPE [FR] ET AL) 16 June 2011 (2011-06-16) * the whole document * | 1-6 | |

-/--

The present search report has been drawn up for all claims

| Place of search | Date of completion of the search | Examiner |
|---|---|---|
| Munich | 1 July 2015 | Klein, Marc-Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                                 

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 15 30 5053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/17996 A1 (MINE SAFETY APPLIANCES CO [US]) 30 April 1998 (1998-04-30)<br>* abstract *<br>* page 7, lines 1-4 *<br>* claim 1 * | 1-5,7-12 | |
| A | COLILLA M ET AL: "Silacrown modified xerogels as functional hybrid materials for carbon composite electrodes",<br>COMPTES RENDUS - CHIMIE, ELSEVIER, PARIS, FR,<br>vol. 13, no. 1-2,<br>1 January 2010 (2010-01-01), pages 227-236, XP026940160,<br>ISSN: 1631-0748, DOI: 10.1016/J.CRCI.2009.06.006<br>[retrieved on 2009-07-18]<br>* the whole document * | 1-6 | |
| A | TSIONSKY M ET AL: "ELECTROCHEMICAL COMPOSITE CARBON-CERAMIC GAS SENSORS: INTRODUCTION AND OXYGEN SENSING",<br>ANALYTICAL CHEMISTRY, AMERICAN CHEMICAL SOCIETY, US,<br>vol. 67, no. 14, 15 July 1995 (1995-07-15) , pages 2409-2414, XP000519005,<br>ISSN: 0003-2700, DOI: 10.1021/AC00110A014<br>* the whole document * | 1-6 | TECHNICAL FIELDS<br>SEARCHED     (IPC) |

The present search report has been drawn up for all claims

| Place of search | Date of completion of the search | Examiner |
|---|---|---|
| Munich | 1 July 2015 | Klein, Marc-Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 045 901 A1**

## ANNEX TO THE EUROPEAN SEARCH REPORT
## ON EUROPEAN PATENT APPLICATION NO.

EP 15 30 5053

01-07-2015

| Patent document cited in search report | | | Publication date | Patent family member(s) | | | Publication date |
|---|---|---|---|---|---|---|---|
| EP 1431757 | | A1 | 23-06-2004 | CN | 1571924 | A | 26-01-2005 |
| | | | | EP | 1431757 | A1 | 23-06-2004 |
| | | | | RU | 2196322 | C1 | 10-01-2003 |
| | | | | US | 2004222107 | A1 | 11-11-2004 |
| | | | | WO | 03016895 | A1 | 27-02-2003 |
| US 2011140051 | | A1 | 16-06-2011 | CA | 2719465 | A1 | 15-10-2009 |
| | | | | CN | 102123787 | A | 13-07-2011 |
| | | | | EP | 2271423 | A2 | 12-01-2011 |
| | | | | FR | 2929284 | A1 | 02-10-2009 |
| | | | | JP | 5535189 | B2 | 02-07-2014 |
| | | | | JP | 2011517650 | A | 16-06-2011 |
| | | | | KR | 20100135827 | A | 27-12-2010 |
| | | | | RU | 2010143551 | A | 10-05-2012 |
| | | | | US | 2011140051 | A1 | 16-06-2011 |
| | | | | WO | 2009125094 | A2 | 15-10-2009 |
| WO 9817996 | | A1 | 30-04-1998 | AU | 5001797 | A | 15-05-1998 |
| | | | | WO | 9817996 | A1 | 30-04-1998 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014060904 A
- US 20110140051 A

- FR 1455293

**Non-patent literature cited in the description**

- **R.W. PEKALA.** *J Mater Sci,* 1989, vol. 24, 3221-3227

- **A. LEONARD.** *Carbon,* July 2005, vol. 43 (8), 1808-1811